# EUROPÄISCHE PATENTSCHRIFT

(11) **EP 1 704 943 B1**
(45) Veröffentlichungstag und Bekanntmachung des Hinweises auf die Patenterteilung: **05.04.2017**
(21) Anmeldenummer: 06004683.6
(22) Anmeldetag: 08.03.2006
(51) Int. Cl.: B21K 1/34, B21J 9/02, B60B 3/04, B21K 1/32, B21K 1/40

(54) **Verfahren zum Herstellen eines Radsterns**
Process for the manufacture of a wheel disk body
Procédé de fabrication d'un disque de roue

(30) Priorität: 23.03.2005 DE 102005013347
(43) Veröffentlichungstag der Anmeldung: 27.09.2006
(73) Patentinhaber: Dr. Ing. h.c. F. Porsche AG, 70435 Stuttgart (DE); SMS group GmbH, 40237 Düsseldorf (DE)
(72) Erfinder: Separautzki, Reinhold, 71696 Moeglingen (DE); Sczesny, Werner, 44795 Bochum (DE)
(74) Vertreter: Sturm, Christoph

(56) Entgegenhaltungen:
- EP-A- 0 509 610
- PATENT ABSTRACTS OF JAPAN Bd. 1995, Nr. 10, 30. November 1995 (1995-11-30) -& JP 07 178499 A (NISSAN MOTOR CO LTD), 18. Juli 1995 (1995-07-18)
- PATENT ABSTRACTS OF JAPAN Bd. 009, Nr. 286 (M-429), 13. November 1985 (1985-11-13) -& JP 60 127040 A (KOBE SEIKOSHO KK), 6. Juli 1985 (1985-07-06)
- PATENT ABSTRACTS OF JAPAN Bd. 2000, Nr. 06, 22. September 2000 (2000-09-22) -& JP 2000 079801 A (TOPY IND LTD), 21. März 2000 (2000-03-21)

## Beschreibung

Die Erfindung bezieht sich auf ein Verfahren zur Herstellung eines Radsterns und ein Radstern eines Fahrzeugrades nach dem Oberbegriff des Anspruchs 1.

Aus der EP 0 509 610 A1 ist ein Verfahren zur Herstellung eines Fahrzeugrades bekannt, bei der eine Ausformung des Rades mittels einer partiellen Umformung in einer Axial-Gesenkwalzmaschine erfolgt. Die Umformung wird zwischen rotierenden Werkzeugen vorgenommen, bei der das Oberwerkzeug um einen Winkel zur Vertikalen geneigt ist.

Aufgabe der Erfindung ist es, ein verbessertes Verfahren zur Herstellung eines Radsterns oder eines Rades zu schaffen, mit der Möglichkeit vorgeformte Luftöffnungen, die durch Nachbearbeitung im Radstern-Rohling gefertigt werden, zu schaffen.

Diese Aufgabe wird durch die Verfahrensmerkmale nach Anspruch 1 gelöst.

Damit ein einfaches Einbringen der Luftöffnungen im Radstern ermöglicht wird, ist nach der Erfindung vorgesehen, dass der Radstern-Rohling als ausgeformter Radstern mit seiner Rückseite im Unterwerkzeug der Vorrichtung angeordnet ist, seine Vorderseite fertig ausgewalzt am Oberwerkzeug der Vorrichtung ausgebildet ist und in Bereichen zwischen Radspeichen des ausgeformten Radsterns mit in einem Endauswalzzustand Taschen für geschlossene Luftöffnungen ausgeformt sind, die zum Unterwerkzeug hin jeweils eine die Luftöffnungen abschließende Bodenwandung aufweisen, die in einem Fertigzustand entfernbar ist. Das Entfernen der die Taschen der Luftöffnungen abschließenden Bodenwandungen erfolgt vorzugsweise mittels mechanischer Bearbeitung bis zur Erzielung von durchgängigen freiliegenden Luftöffnungen. Insbesondere können nach der Erfindung die Bodenwandungen der Taschen für die Luftöffnungen durch einen Abdrehvorgang entfernt werden.

Damit die Luftöffnungen mittels einfacher Bearbeitung optimal durchgängig bearbeitet werden können, und zudem auch außerhalb der Öffnungsmündung der Luftöffnungen liegende Bereiche des Radsterns mitzubearbeiten sind, ist nach der Erfindung vorgesehen, dass die Taschen eine Grundtiefe bis zur Innenfläche der Bodenwandung aufweisen, welche um ein Maß tiefer liegt, als eine Bearbeitungsfläche zur Entfernung der Bodenwandung durch mechanische Bearbeitung. Hierdurch wird nach der Erfindung erreicht, dass die Bodenwandung sich über den Bereich der Taschen hinaus vom Randbereich bis zum erhöht ausgeführten Nabenzentrum des Radsterns erstreckt und diese Bereiche bis zur Bearbeitungsfläche mechanisch abgetragen werden.

Der Radstern nach der Erfindung weist nach dem Umformverfahren im Endauswalzzustand einen solchen Werkstoffauftrag als Bodenwand bezeichnet auf, die durch mechanische Bearbeitung nach der Erfindung abgetragen wird. Ein unterhalb des Bereichs der Radspeichen liegender Flächenbereich, welcher die Bodenwandung der Taschen bildet, wird nicht entfernt und die Speiche weist hierdurch eine größere Dicke auf als die Tiefe der freiliegenden Luftöffnung. Hierdurch wird erreicht, dass die Radspeichen eine entsprechende geforderte Festigkeit aufweisen können.

Damit nach der Ausformung des Radsterns, bei einem einteiligen Rad, nachfolgend eine Felge ausgeformt werden kann, ist nach der Erfindung vorgesehen, dass der Radstern am Umfangsrand eine entsprechende Massenanformung für eine auszuwalzende Felge aufweist. Durch diese Anformung ist ein Auswalzen der Felge im Flow-Forming Verfahren in einfacher Weise möglich.

Ein Ausführungsbeispiel der Erfindung ist in den Zeichnungen dargestellt und wird im Folgenden näher beschrieben.

Es zeigen
- Fig. 1 bis 3: eine Axial-Gesenkvorrichtung mit einem Unter- und Obergesenk und zwischengelegtem zylindrischen Rohling und ausgewalztem Radstern,
- Fig. 4: eine vergrößerte Darstellung der Axial-Gesenkwalzmaschine mit zylindrischem Rohling und ausgewalztem Radstern,
- Fig. 5: eine Draufsicht auf einen ausgewalzten Radstern mit Luftöffnungen in Taschen mit Bodenwandungen,
- Fig. 6: einen Schnitt nach der Linie VI-VI der Fig. 5 durch den Radstern,
- Fig. 7: eine Querschnittsansicht durch den Radstern mit eingezeichnetem Bearbeitungsbereich im Endauswalzzustand und
- Fig. 7a: eine Querschnittsansicht des Radsterns im Fertigzustand mit freigelegten Luftöffnungen und
- Fig. 8: einen Schnitt nach der Linie VIII-VIII der Fig. 6 durch den Radstern.

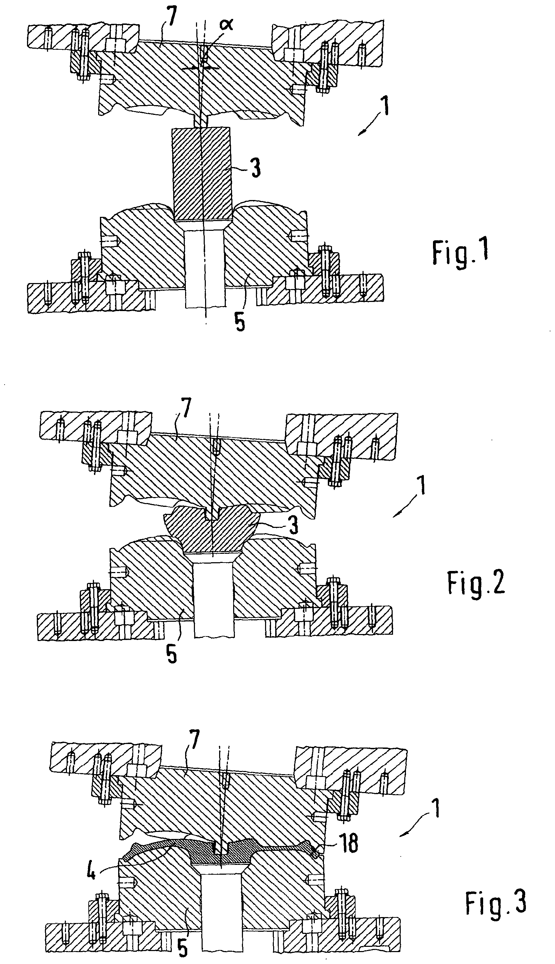

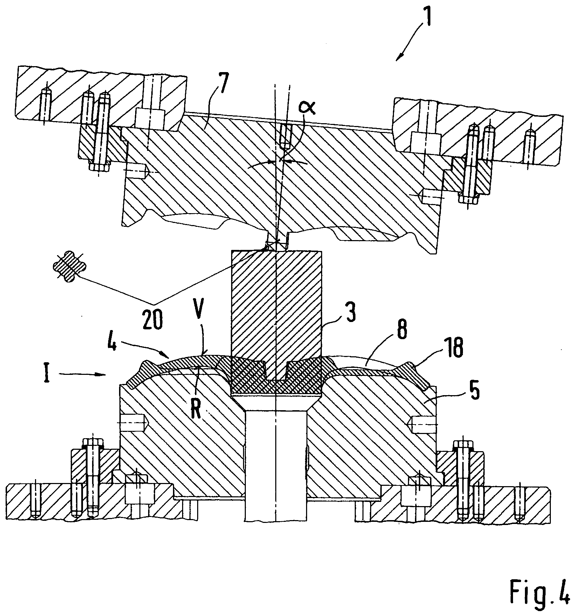

Wie in den Fig. 1 bis 4 näher zu erkennen ist, wird über eine Axial-Gesenkwalzmaschine 1 in bekannter Weise ein Radstern 4 bearbeitet und zwar beispielsweise von einem zylindrischem Rohling 3 bis zu dem Radstern 4 in einem Endauswalzzustand I. Dieser Radstern 4 ist mit seiner Rückseite R in einem Unterwerkzeug 5 bzw. einem Gesenk und mit seiner Vorderseite V in einem Oberwerkzeug 7 bzw. einem Gesenk der Vorrichtung 1 gelegen. Das Auswalzen des Radsterns 4 erfolgt über eine rotierende Bewegung des Oberwerkzeugs 7 unter einem Winkel α, derart, dass Taschen 8 für spätere durchgängige Luftöffnungen 10 im Felgenstern 4 gebildet werden können.

Der Radstern 4 ist im Unterwerkzeug 5 in eine entsprechend der gewünschten Ausbildung der Rückseite R des Felgensterns 4 ausgebildete Form des Unterwerkzeugs 5 hineingewalzt. Die Vorderseite V des Radsterns 4 kann entsprechend der Form des Oberwerkzeugs 7 mit Taschen 8 für die späteren Luftöffnungen 10 und den Radspeichen 11 ausgewalzt werden.

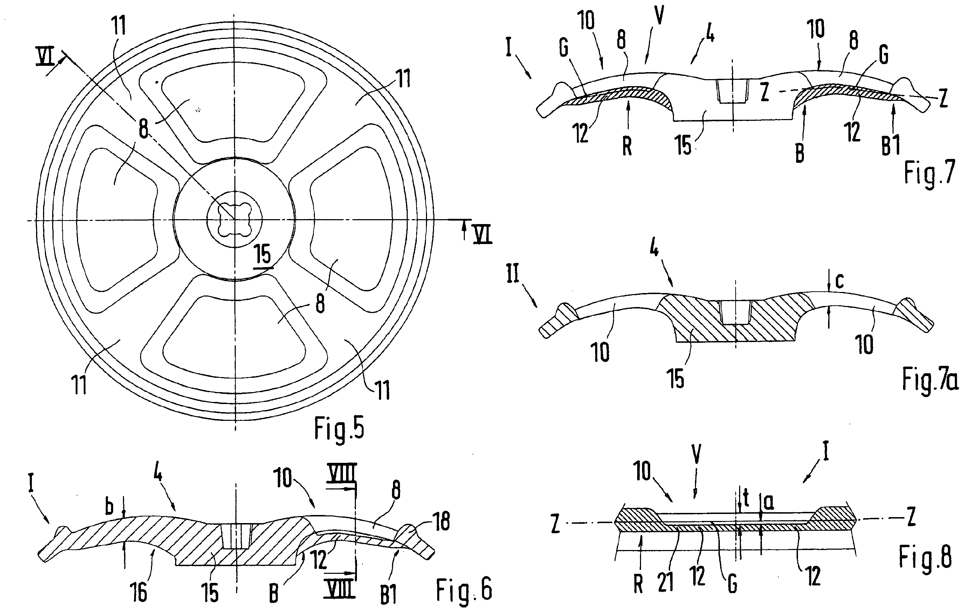

Das Auswalzen erfolgt in der Weise, mittels des Oberwerkzeugs 7, dass sich zwischen den Radspeichen 11 die Taschen 8 mit einer Bodenwandung 12 bilden, welche im fertig ausgewalztem Zustand, wie in einem Endauswalzzustand (I) des Radsterns 4 diese Taschen abschließen, wie die Fig. 7 und 8 näher zeigen.

Damit die Luftöffnungen 10 des Radsterns im Endzustand II durchgängig gestaltet werden können, wie Fig. 7a näher zeigt, wird die Bodenwandung 12 jeder Tasche 8 mechanisch entfernt, beispielsweise durch einen Abdrehvorgang. Ein fertig bearbeiteter Radstern 4 ist in Fig. 7a näher dargestellt, in welcher die Luftöffnungen 10 durchgängig gezeigt sind.

Zur Erzielung der durchgängigen Luftöffnungen 10 im Felgenstern 4 sowie einer Bearbeitung von untenliegenden Bereichen B und B1 der Rückseite R des Felgensterns 4 wird eine Bearbeitungsfläche Z-Z gewählt, die oberhalb einer Grundtiefe G der Tasche 8 liegt. Das heißt eine Innenfläche 21 der Tasche 8 liegt um ein Maß a tiefer als die Bearbeitungsfläche Z-Z zum Entfernen der Bodenwandung 8. Die noch mechanisch zu bearbeitenden Bereiche B und B1 der Rückseite R des Radsterns 4 erstrecken sich über die Tasche 8 hinaus vom Randbereich 18 bis zum erhöht ausgeführten Nabenzentrum 15 des Radsterns 4. Eine Bearbeitung der Rückseiten 16 der Radspeichen 11 unterbleibt, wie Fig. 6 näher zeigt, so dass die Radspeichen 11 mit dem Maß b dickwandiger ausgeführt sind im Vergleich zu der Tiefe c der Luftöffnungen 8.

Am Rand des Radsterns 4 kann eine Massenanformung 18 vorgesehen sein, welche zur Ausformung für eine Felge am Radstern 4 dient, die nicht näher dargestellt ist.

Die Herstellung des Felgensterns 4 über die Axial-Gesenkwalzmaschine 1 erfolgt durch ein Rotieren des Unter- und Oberwerkzeugs 5 und 7 bzw. eines Unter- und Obergesenks, wobei das Oberwerkzeug 7 unter dem Winkel α zur Vertikalen steht und eine partielle Umformung des Rohlings 3 erfolgen kann. Die Werkzeuge 5 und 7 bzw. die Gesenke werden durch Materialfluss während des Auswalzens gefüllt und anschließend in einer Kalibrierphase geglättet. Ein Mitnehmerzapfen 20 am Oberwerkzeug 7 soll ein Verdrehen des Rohlings 3 während des Walzens verhindern. Durch ein Abdrehen der Rückseite R des Radsterns 4 werden die Taschen 8 zur Bildung von Luftöffnungen 10, mittels einem Entfernen der Bodenwandung 12 freigelegt und sind somit luftdurchgängig.

## Patentansprüche

1. Verfahren zum Herstellen eines Radsterns (4) durch ein partielles Ausformen eines zylindrischen Radstern-Rohlings (3) eines Fahrzeugrades zwischen Gesenken (5 und 7) einer eine Drehbewegung durchführenden Axial-Gesenkwalzmaschine (1), wobei der zylindrische Radstern-Rohling (3) als Ausgangsmaterial für den Radstern (4) verwendet wird, der in einem Unterwerkzeug (5) der Axial-Gesenkwalzmaschine (1) gehalten und in einem Oberwerkzeug (7) der Vorrichtung (1) mitdrehend fixiert ist, **dadurch gekennzeichnet, dass** der Radstern-Rohling (3) als ausgeformter Radstern (4) mit seiner Rückseite (R) im Unterwerkzeug (5) der Vorrichtung (1) angeordnet ist und seine Vorderseite (V) fertig ausgewalzt vom Oberwerkzeug (7) der Vorrichtung (1) ausgebildet ist und in Bereichen zwischen Radspeichen (11) des ausgeformten Radsterns (4) in einem Endauswalzzustand (I) durch Taschen (8) gebildete geschlossene Luftöffnungen (10) ausgeformt sind, die zum Unterwerkzeug (5) hin jeweils eine die Luftöffnungen (10) an der Rückseite (R) des Radsterns (4) abschließende Bodenwandung (12) aufweisen, und diese in dem Endauswalzzustand (I) durch Taschen (8) gebildeten geschlossenen Luftöffnungen (10) mittels mechanischer Bearbeitung zur Erzielung von durchgängigen Luftöffnungen (10) entfernt werden, wobei die Taschen (8) eine Grundtiefe (t) bis zur Innenfläche (21) der Bodenwandung (12) aufweisen, welche um ein Maß (a) tiefer liegt als eine Bearbeitungsfläche (G) zur Entfernung der Bodenwandung (12) durch eine mechanische Bearbeitung und die Bodenwandung (12) sich über den Bereich der Tasche (8) hinaus vom Radrandbereich (B1) bis zum Bereich (B) eines erhöht ausgeführten Nabenzentrums (15) des Radsterns (4) erstreckt und diese Bereiche (B und B1) bis zur Bearbeitungsfläche (G) mechanisch mit der Bodenwandung (12) abgetragen wird.

## Claims

1. Method for producing a wheel centre member (4) by partial forming of a cylindrical wheel centre member blank (3) of a vehicle wheel between dies (5 and 7) of an axial die rolling machine (1) which performs a rotational movement, wherein the cylindrical wheel centre member blank (3) is used as starting material for the wheel centre member (4), which is held in a lower tool (5) of the axial die rolling machine (1) and is fixed for conjoint rotation in an upper tool (7) of the device (1), **characterized in that** the wheel centre member blank (3) as formed wheel centre member (4) is arranged with its rear side (R) in the lower tool (5) of the device (1) and its front side (V) is fully rolled out by the upper tool (7) of the device (1), and closed air openings (10) formed by pockets (8) in a final rolled-out state (I) are formed in regions between wheel spokes (11) of the formed wheel centre member (4), which air openings have, towards the lower tool (5), in each case one base wall (12) which terminates the air openings (10) at the rear side (R) of the wheel centre member (4), and said closed air openings (10) formed by pockets (8) in the final rolled-out state (I) are removed by mechanical machining to realize air openings (10) which extend all the way through, wherein the pockets (8) have a main depth (t) to the inner surface (21) of the base wall (12), which lies lower, by a dimension (a), than a machining surface (G) for the removal of the base wall (12) by mechanical machining, and the base wall (12) extends beyond the region of the pocket (8) from the wheel edge region (B1) to the region (B) of a hub centre (15) of elevated form of the wheel centre member (4), and said regions (B and B1) are mechanically removed with the base wall (12) as far as the machining surface (G).

## Revendications

1. Procédé de fabrication d'une étoile de roue (4) par formation partielle d'une ébauche d'étoile de roue cylindrique (3) d'une roue de véhicule entre des matrices (5 et 7) d'une machine à cylindres de matriçage axial (1) effectuant un mouvement de rotation, l'ébauche d'étoile de roue cylindrique (3) étant utilisée en tant que matériau de départ pour l'étoile de roue (4), qui est retenue dans un outil inférieur (5) de la machine à cylindres de matriçage axial (1) et qui est fixée de manière à tourner conjointement dans un outil supérieur (7) du dispositif (1), **caractérisé en ce que** l'ébauche d'étoile de roue (3) est disposée en tant qu'étoile de roue formée (4) avec son côté arrière (R) dans l'outil inférieur (5) du dispositif (1) et son côté avant (V) est achevé par laminage par l'outil supérieur (7) du dispositif (1), et des ouvertures d'air fermées (10) formées par des poches (8) sont réalisées dans des régions entre les rayons de roue (11) de l'étoile de roue formée (4) dans un état de laminage final (I), lesquelles présentent vers l'outil inférieur (5) à chaque fois une paroi de fond (12) fermant les ouvertures d'air (10) au niveau du côté arrière (R) de l'étoile de roue (4), et ces ouvertures d'air fermées (10) formées par des poches (8) dans l'état de laminage final (I) sont enlevées par usinage mécanique pour obtenir des ouvertures d'air traversantes (10), les poches (8) présentant une profondeur de base (t) jusqu'à la surface intérieure (21) de la paroi de fond (12) qui est plus profonde d'une dimension (a) qu'une surface d'usinage (G) pour enlever la paroi de fond (12) par usinage mécanique et la paroi de fond (12) s'étendant au-delà de la région de la poche (8) depuis la région de bord de la roue (B1) jusqu'à la région (B) d'un centre de moyeu (15) de l'étoile de roue (4) réalisé de manière rehaussée et ces régions (B et B1) étant enlevées mécaniquement avec la paroi de fond (12) jusqu'à la surface d'usinage (G).
